# EUROPÄISCHE PATENTSCHRIFT

(11) **EP 1 663 759 B1**
(45) Veröffentlichungstag und Bekanntmachung des Hinweises auf die Patenterteilung: **13.05.2009**
(21) Anmeldenummer: 04762404.4
(22) Anmeldetag: 16.07.2004
(51) Int. Cl.: B62B 3/18

(54) **TRANSPORTCONTAINER**
TRANSPORT CONTAINER
CONTENANT DE TRANSPORT

(30) Priorität: 28.07.2003 DE 10334573
(43) Veröffentlichungstag der Anmeldung: 07.06.2006
(73) Patentinhaber: WANZL METALLWARENFABRIK GMBH, D-89336 Leipheim (DE)
(72) Erfinder: KAUP, Wolfgang, 87757 Kirchheim (DE)
(86) Internationale Anmeldenummer: PCT/DE2004/001550
(87) Internationale Veröffentlichungsnummer: WO 2005/012060

(56) Entgegenhaltungen:
- WO-A-98/24699
- GB-A- 2 292 352
- US-A- 3 953 044
- US-A- 5 125 520

## Beschreibung

Die Erfindung betrifft einen von Hand bewegbaren Transportcontainer, mit einem Fahrgestell, mit einem um eine horizontale Achse verschwenkbaren Boden und mit einem nach oben sich erstreckenden Aufbau, wobei das Fahrgestell zwei parallele Seiten aufweist und eine Form besitzt, die ein platzsparendes Einschieben des Transportcontainers in einen weiteren gleichen Transportcontainer dann erlaubt, wenn sich der Boden sowie Teile des Aufbaues in einer Nichtgebrauchslage befinden.

Bekannte Transportcontainer dieser Art weisen ein aus Stahl gefertigtes Fahrgestell auf, das entweder eine Z-förmige Form oder einen trapezförmigen Grundriss aufweist, dessen längere parallele Seite fehlt. Das Fahrgestell dieser Transportcontainer trägt einen gewöhnlich aus Drahtgitter gefertigten Boden sowie einen aus metallischen Wänden gebildeten Aufbau, so dass in Gebrauchslage ein Raum zur Aufnahme von Ware, Stückgüter und dergleichen geschaffen wird. Bewegt man den Boden sowie Teile des Aufbaues in eine Nichtgebrauchslage, so lassen sich gleiche Transportcontainer platzsparend ineinanderschieben. Der nach oben verschwenkbare Boden liegt in Gebrauchslage auf dem Fahrgestell auf.

Die eben beschriebenen Transportcontainer weisen zwei Nachteile auf. Der erste Nachteil besteht darin, dass sich bei schwerer Beladung an der unmittelbar am B oden aufliegenden Ware Druckstellen bilden können, die durch die gitterförmige Struktur des Bodens verursacht werden.

Der zweite Nachteil zeigt sich darin, dass der Boden zumindest mit seiner Dicke auf dem Fahrgestell aufbaut. Da die Bauhöhen der genannten Transportcontainer genormt sind und diese Höhen nicht überschritten werden dürfen, geht, bedingt durch die Dicke des Bodens, wertvoller Aufnahmeraum für die zu transportierende Ware verloren.

Aus dem Stand der Technik ist ferner ein Container bekannt, wie er beispielsweise in der internationalen Veröffentlichungsschrift WO 98/24699 beschrieben ist. Dieser weist ein Fahrgestell auf. An diesem ist ein um eine horizontale verschwenkbarer Boden angeordnet. Am Fahrgestell sind zur Fixierung des Bodens Halter vorgesehen. Der Container weist zwei parallele Seiten auf und kann in gleiche Wagen gestapelt werden.

Weiterhin ist ein stapelbarer Container aus dem US-Patent 5,125,520 bekannt. Das Fahrgestell ist aus mehreren z-förmigen Etagen gebildet, auf die ein Boden - wie z.B. ein Tablett eingeschoben werden kann.

Es ist Aufgabe der Erfindung, einen Transportcontainer der hier vorliegenden Art so weiterzuentwickeln, dass die beiden beschriebenen Nachteile vermieden werden.

Die Lösung der Aufgabe besteht darin, dass das Fahrgestell einen aus Kunststoff bestehenden Grundkörper aufweist und der Boden ebenfalls aus Kunststoff gefertigt ist, wobei der Grundkörper einen Aufnahmebereich besitzt, in dem sich der Boden in der Gebrauchslage befindet und dass sich in dieser Lage die Abstellfläche des Bodens sowie Abschnitte des Grundkörpers oder des Fahrgestelles auf einer Ebene befinden, um eine gemeinsame Ladefläche zu bilden, wobei hierfür der Aufnahmebereich für den Boden als Vertiefung ausgebildet ist und wobei ferner der Aufnahmebereich Abstufungen aufweist.

Bei dem aus Kunststoff gefertigten Boden lässt sich die für die Ware bestimmte Stellfläche vollkommen eben ausbilden. Dadurch lassen sich die vorab erwähnten, an der untersten Ware auftretenden Druckstellen vermeiden.

Da das Fahrgestell einen Grundkörper aufweist, der ebenfalls aus Kunststoff gefertigt ist, lässt sich an diesem ein als Vertiefung ausgebildeter Aufnahmebereich anformen, der den Boden in dessen Gebrauchslage komplett aufnimmt. Dadurch baut der Boden nach oben nicht auf und der für die Ware bestimmte Aufnahmeraum ist bei gleicher Normhöhe des Transportcontainers größer als bei den eingangs genannten, zum Stand der Technik zählenden Transportcontainern.

Da der Boden in das Fahrgestell einfügbar ist, erweist es sich ebenfalls als zweckmäßig, wenn die Abstellfläche des Bodens und die obere Begrenzung des Grundkörpers oder des Fahrgestelles auf einer gemeinsamen horizontalen Ebene liegen. Dadurch können auch Abschnitte des Grundkörpers bzw. des Fahrgestelles als Abstellfläche genutzt werden.

Die Erfindung wird anhand von Ausführungsbeispielen näher erläutert. Es zeigt
Fig. 1 einen Tranportcontainer;
Fig. 2 ein "N-förmiges" Fahrgestell sowie
Fig. 3 im Detail das Fahrgestell entsprechend Fig. 2 mit Boden.

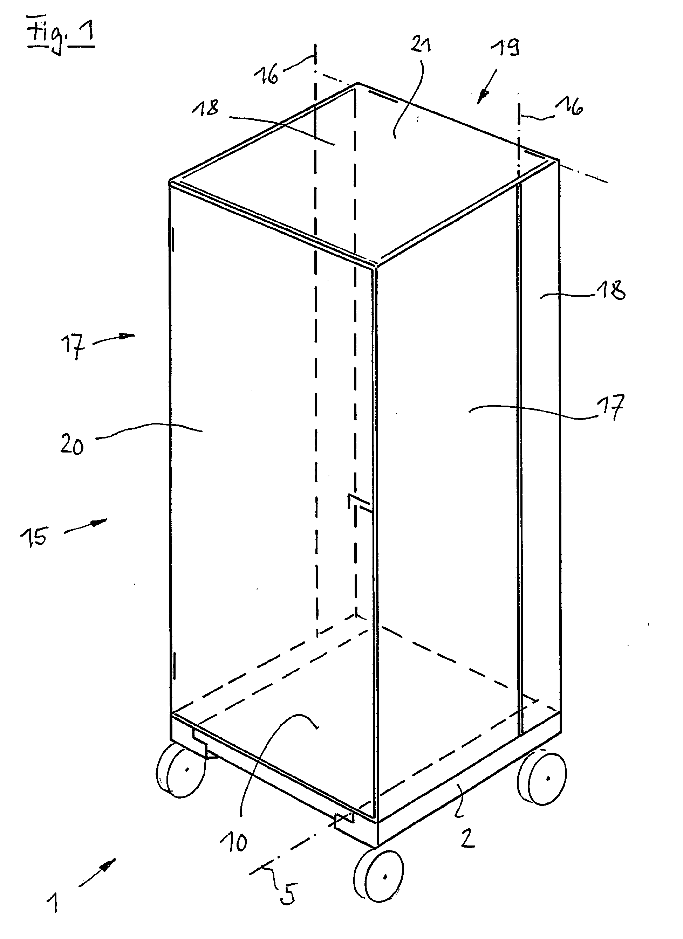

Der in Fig. 1 dargestellte, von Hand bewegbare Transportcontainer 1 bedient sich jener zweckmäßigen Grundform, die von bekannten fahrbaren.

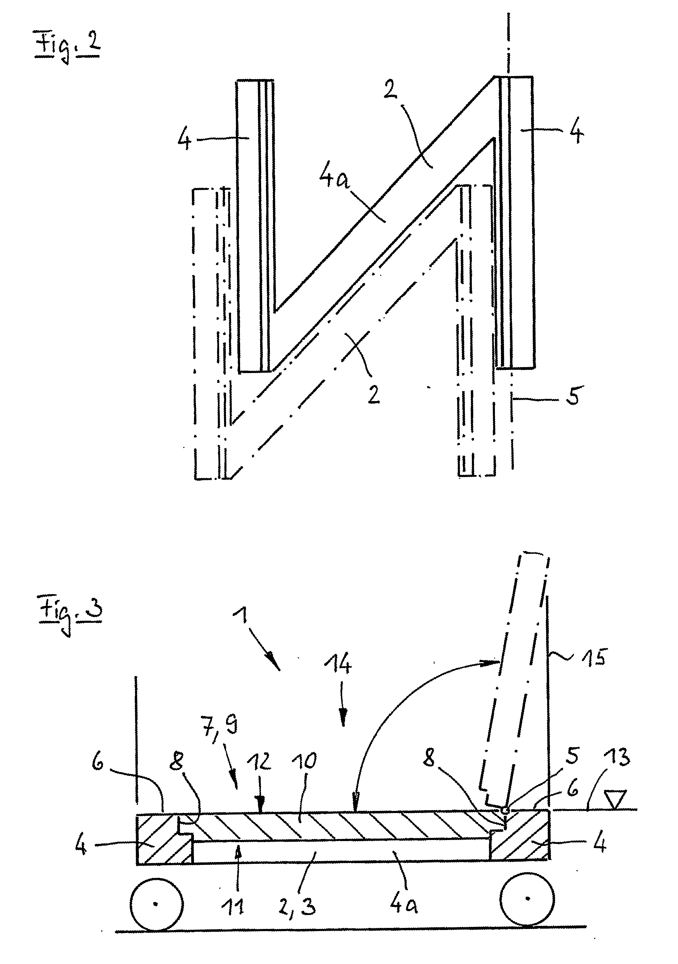

Transportcontainern 1 her bekannt ist. So weist der Transportcontainer 1 ein mit Fahrrollen ausgestattetes Fahrgestell 2 auf, das einen um 90° nach oben verschwenkbaren Boden 10 trägt. Das Fahrgestell 2 trägt ferner einen nach oben sich erstreckenden Aufbau 15, der mindestens zwei um je eine vertikale Achse 16 verschwenkbare Wände 17 aufweist, die beispielsweise an ortsfest angeordneten Wandabschnitten 18 angelenkt sind. Der Aufbau 15 kann eine ortsfeste Rückwand 19, eine Türe 20 und eine obere Abdeckung 21 aufweisen. Teile des Aufbaues 15 sowie der Boden 10 lassen sich in bekannter Weise aus einer Gebrauchslage in eine Nichtgebrauchslage überführen, so dass der Transportcontainer 1 in ebenfalls bekannter Weise in einen gleichen Transportcontainer 1 platzsparend eingeschoben werden kann, wobei das Fahrgestell 2 in bevorzugter Weise so gestaltet ist, wie nachfolgend in Figur 2 beschrieben.

Das in Fig. 2 dargestellte, für den Transportcontainer 1 bestimmte Fahrgestell 2 weist einen N- oder Z-förmigen Grundriss auf, wobei das Fahrgestell 2 ferner so gestaltet ist, dass das Fahrgestell 2 eines weiteren gleichen Transportcontainers 1 in das Fahrgestell 2 des eben beschriebenen Fahrgestelles 2 einschiebbar ist, siehe strichpunktierte Darstellung. Das Fahrgestell 2 weist zwei parallele Seiten 4 auf, die durch einen Steg 4a verbunden sind. An einer der Seiten 4, und parallel zu dieser angeordnet, ist die horizontale Achse 5 eingezeichnet, um die sich der Boden 10 in bekannter Weise aus der horizontalen Gebrauchslage nach oben in die Nichtgebrauchslage bewegen lässt. Anstelle eines N- oder Z-förmigen Grundrisses kann das Fahrgestell 2 auch einen H-förmigen Grundriss aufweisen.

Im Detail und teilweise geschnitten zeigt Fig. 3 das Fahrgestell 2 des Transportcontainers 1. Das Fahrgestell 2 weist einen aus Kunststoff bestehenden Grundkörper 3 auf, der einen als Vertiefung 7 ausgebildeten Aufnahmebereich 9 besitzt, welcher als Abstufung 8 ausgebildet ist und in dem der in Gebrauchslage befindliche, ebenfalls aus Kunststoff gefertigte Boden 10 bevorzugt formschlüssig eingefügt ist. Die den Aufnahmebereich 9 bildenden Abstufungen 8 sind auch in Figur 2 eingezeichnet. Die Abstufungen 8 befinden sich an den Innenseiten der parallelen Seiten 4. Sie liegen sich also spiegelbildlich gegenüber. An einer der Abstufungen 8 befindet sich die horizontale Achse 5, um welche der Boden 10 aus der gezeichneten Gebrauchslage nach oben in die Nichtgebrauchslage (strichpunktiert dargestellt) und wieder zurück bewegbar ist. Die Unterseite 11 des Bodens 10 ist ebenfalls stufenförmig so gestaltet, dass eine formschlüssige Aufnahme des Bodens 10 im Aufnahmebereich 9 möglich ist. Die Abstellfläche 12 des Bodens 10 befindet sich im Beispiel auf der gleichen horizontalen Ebene 13 wie die beiden oberen Abschnitte 6 des Fahrgestelles 2 oder des Grundkörpers 3. Dadurch wird eine gemeinsame Ladefläche 14 gebildet. Der Grundkörper 3 ist als Bauteil ohne Fahrrollen zu verstehen. Gleichwohl kann im Grundkörper 3 beispielsweise wenigstens ein metallisches, der Verstärkung des Grundkörpers 3 dienendes Teil eingespritzt sein.

## Patentansprüche

1. Von Hand bewegbarer Transportcontainer (1), mit einem Fahrgestell (2), mit einem um eine horizontale Achse (5) verschwenkbaren Boden (10) und mit einem nach oben sich erstreckenden Aufbau (15), wobei das Fahrgestell (2) zwei parallele Seiten (4) aufweist und eine Form besitzt, die ein platzsparendes Einschieben des Transportcontainers (1) in einen weiteren gleichen Transportcontainer (1) dann erlaubt, wenn sich der Boden (10) sowie Teile des Aufbaues (15) in einer Nichtgebrauchslage befinden, **dadurch gekennzeichnet, dass** das Fahrgestell (2) einen aus Kunststoff bestehenden Grundkörper (3) aufweist und der Boden (10) ebenfalls aus Kunststoff gefertigt ist, wobei der Grundkörper (3) einen Aufnahmebereich (9) besitzt, in dem sich der Boden (10) in der Gebrauchslage befindet und dass sich in dieser Lage die Abstellfläche (12) des Bodens (10) sowie Abschnitte (6) des Grundkörpers (3) oder des Fahrgestelles (2) auf einer Ebene (13) befinden, um eine gemeinsame Ladefläche (14) zu bilden, wobei hierfür der Aufnahmebereich (9) für den Boden (10) als Vertiefung (7) ausgebildet ist und wobei ferner der Aufnahmebereich (9) Abstufungen (8) aufweist.

2. Transportcontainer nach Anspruch 1, **dadurch gekennzeichnet, dass** das Fahrgestell (2) einen N- oder Z- oder einen H-förmigen Grundriss aufweist.

3. Transportcontainer nach Anspruch 1, **dadurch gekennzeichnet, dass** sich die Abstufungen (8) an den beiden parallelen Seiten (4) des Fahrgestelles (2) befinden.

4. Transportcontainer nach Anspruch 1, **dadurch gekennzeichnet, dass** sich an einer der Abstufungen (8) die horizontale Achse (5) befindet.

5. Transportwagen nach einem der Ansprüche 1 bis 4, **dadurch gekennzeichnet, dass** die Unterseite (11) des Bodens (10) in Anpassung an den Aufnahmebereich (9) stufenförmig gestaltet ist.

## Claims

1. A manually movable transport container (1), comprising a chassis (2), a bottom (10) which is pivotable about a horizontal axis (5), and an upwardly extending superstructure (15), wherein the chassis (2) has two parallel sides (4) and has a shape which allows the transport container (1) to be pushed into another, identical transport container (1) in a space-saving manner when the bottom (10) and parts of the superstructure (15) are located in a position of non-use, **characterised in that** the chassis (2) has a base body (3) made of plastic and the bottom (10) is likewise manufactured from plastic, wherein the base body (3) has a receiving region (9) in which the bottom (10) is located in the position of use, and **in that** in this position the depositing surface (12) of the bottom (10) and portions (6) of the base body (3) or the chassis (2) are arranged in one plane (13) in order to form a common loading surface (14), wherein for this purpose the receiving region (9) for the bottom (10) is formed as a recess (7) and wherein in addition the receiving region (9) has steps (8).

2. A transport container according to claim 1, **characterised in that** the chassis (2) has an N-, Z- or H-shaped contour.

3. A transport container according to claim 1, **characterised in that** the steps (8) are located on the two parallel sides (4) of the chassis (2).

4. A transport container according to claim 1, **characterised in that** the horizontal axis (5) is located on one of the steps (8).

5. A transport trolley according to any one of claims 1 to 4, **characterised in that** the underside (11) of the bottom (10) is stepped in conformity with the receiving region (9).

## Revendications

1. Conteneur de transport (1) mobile manuellement, muni d'un châssis de roulement (2) comprenant un fond (10) pouvant pivoter autour d'un axe horizontal (5), et une superstructure (15) s'étendant vers le haut, ledit châssis de roulement (2) comportant deux faces parallèles (4), et possédant une forme permettant d'insérer ledit conteneur de transport (1) dans un autre conteneur de transport (1) identique, avec économie de place, lorsque le fond (10), ainsi que des parties de la superstructure (15), occupent une position de non-utilisation, **caractérisé par le fait que** le châssis de roulement (2) offre un corps de base (3) constitué d'une matière plastique, et le fond (10) est semblablement fabriqué en matière plastique, ledit corps de base (3) présentant une zone réceptrice (9) dans laquelle le fond (10) se trouve dans la position d'utilisation ; et **par le fait que**, dans cette position, le reposoir (12) du fond (10), ainsi que des régions (6) du corps de base (3) ou du châssis de roulement (2), sont situés dans un plan (13) afin de former une surface de chargement (14) commune, la zone réceptrice (9), destinée au fond (10), étant réalisée à cette fin sous la forme d'un renfoncement (7), et ladite zone réceptrice (9) étant par ailleurs pourvue de gradins (8).

2. Conteneur de transport selon la revendication 1, **caractérisé par le fait que** le châssis de roulement (2) présente un profil de base configuré en N, en Z ou en H.

3. Conteneur de transport selon la revendication 1, **caractérisé par le fait que** les gradins (8) se trouvent sur les deux faces parallèles (4) du châssis de roulement (2).

4. Conteneur de transport selon la revendication 1, **caractérisé par le fait que** l'axe horizontal (5) se trouve sur l'un des gradins (8).

5. Chariot de transport selon l'une des revendications 1 à 4, **caractérisé par le fait que** la face inférieure (11) du fond (10) est de configuration en gradin, avec adaptation à la zone réceptrice (9).
